# EUROPEAN PATENT SPECIFICATION

(11) **EP 1 364 546 B1**
(45) Date of publication and mention of the grant of the patent: **21.04.2010**
(21) Application number: 02700939.8
(22) Date of filing: 22.02.2002
(51) Int. Cl.: H04W 72/08

(54) **SYSTEM AND METHOD FOR OPTIMIZING THE EFFICIENCY OF BASE-TO-VEHICLE COMMUNICATION**
SYSTEM UND VERFAHREN ZUR OPTIMIERUNG DER EFFIZIENZ DER BASIS-ZU-FAHRZEUG- KOMMUNIKATION
SYSTEME ET PROCEDE PERMETTANT D'OPTIMISER L'EFFICACITE D'UNE COMMUNICATION ENTRE UNE STATION DE BASE ET UN VEHICULE

(30) Priority: 23.02.2001 US 270640 P
(43) Date of publication of application: 26.11.2003
(73) Proprietor: VOLVO TECHNOLOGY CORPORATION, 405 08 Göteborg (SE)
(72) Inventor: ANDERSSON, Mats, S-430 30 Frillesas (SE); HULTIN, Magnus, S-439 33 Onsala (SE)
(74) Representative: Fröhling, Werner Otto
(86) International application number: PCT/SE2002/000320
(87) International publication number: WO 2002/071787

(56) References cited:
- EP-A2- 0 946 008
- US-A- 5 862 470
- US-A- 5 974 308
- US-A1- 2001 009 855
- '3rd Generation partnership project; Technical specification group services and system aspects; 3G security; Security architecture' 3G TS 33.102 V3.0.0 May 1999, page 11

## Description

### TECHNICAL FIELD:

The present invention relates generally to fleet management, and more specifically to the management of costs associated with the transmission of data on wireless communication systems from remotely located vehicles to home-base receivers.

### BACKGROUND ART:

It is a common practice in fleet management programs to gather data from remotely located vehicles for tracking purposes and for efficient management of the individual vehicles, as well as for that of the fleet of several vehicles when taken in the aggregate.

US-A-5 974 308 discloses a cellular phone system and in particular a system which is optimised for setting the prices of the system to a subscriber in a manner so as to achieve efficient use of the system.

US-A-5 862 470 describes a telecommunication equipment which is programmed to be operational only during certain periods of time. Telecommunication services are denied outside of this time window.

EP-A2-0 946 008 describes a radio communication system in which a service degradation profile is created. The profile includes different predefined Quality of Service (QoS) values. The standard document "3rd Generation Partnership Project; Technical Specification Group Services and System Aspects; 3G Security; Security Architecture" 3G TS 33.102 V3.0.0 May 1999, describes e.g. checking the provider of a telecommunication service.

The communication of data from such vehicles which may include trucks, trains, automobiles, boats, airplanes and other fleet oriented modes of transportation, is typically made over wireless networks such as through the utilization of satellite and/or cellular service. In the instance of cellular service which is commonly utilized by land based vehicles, not only is the quality of data transmission dependent upon the location of the vehicle, but so is the cost. For example, it has been appreciated that both transmission quality and cost are adversely affected when away from metropolitan/urban areas. When in a metropolitan area such as a city-center, the infrastructure for cellular service is typically robust to accommodate the high density of users in that localized area. Furthermore, the cost of cellular service is typically less in these urban areas because the non-variable costs of the system may be spread among a multitude of users.

The cost of transmission may be affected in another way as well based on quality of transmission. When a transmission connection is lost during data transfer, a resend function is typically initiated. In the subsequent resend(s), it is not uncommon for the entire set of data to be transmitted, not just the unsent portions. This can occur repeatedly, especially in poor transmission areas, significantly increasing the cost to achieve a completed data transmission.

Regarding reception, quality is typically higher in city areas because the user is closer to the stationary antenna which receive and transmit the communications. This may be contrasted to highway conditions which are often in rural areas where transmission quality may be poor and costs will be high. This situation can often be attributed to a lack of competition in the rural areas. For instance, it is not economically feasible for a plurality of service providers to establish individual infrastructures along remote highways. Therefore, a single provider will typically be encountered who may operate in an essentially monopolistic manner.

One prevailing characteristic regarding the retrieval of data from such remotely located vehicles is that such retrieval is not typically time critical. That is to say, the data may be retrieved from the vehicle within suitable time frames or windows; and therefore, some leniency is permitted with respect to the exact time that data is required to be down-loaded from the vehicle(s). In this regard, the present invention appreciates that these times for download may be strategically selected, and that the nature of the individual downloads may be strategically customized to minimize cost and potentiate transmission quality.

In view of the above described deficiencies associated with the use of known arrangements and methods for affecting fleet information gathering, the present invention has been developed to alleviate these drawbacks and provide further benefits to the user. These enhancements and benefits are described in greater detail hereinbelow with respect to several alternative embodiments of the present invention.

### DISCLOSURE OF THE INVENTION:

The present invention in its several disclosed embodiments alleviates the drawbacks described above with respect to conventionally designed fleet information gathering systems and methods, and incorporates several additionally beneficial features.

The present invention, among others, has several important goals: one is to assure quality data transmission from remotely located fleet vehicles to home-base central systems, and another is to minimize associated costs with these transmissions. Another goal of the invention is to enable the user to predict costs associated with fleet data transmission. Because the data transfer conditions can be better controlled, so can the costs associated therewith.

In accordance with the present invention a method for gathering and transmitting data from a remotely located vehicle to a home base receiver on wireless communication systems is provided. Embodiments of the invention are described in the dependent claims.

One concept of the invention is that pre-analysis is performed before data transmission is initiated. Since such data transmission is typically over a cellular system when land-based vehicles are considered, certain conditions can be evaluated prior to the commencement of the actual communication data link. For instance, the local provider of the cellular service to the vehicle has a primary bearing on the cost of the transmission. Therefore, one consideration is to determine the identity of the local provider or operator at the time that a data transmission is prescribed. This evaluation is made before an actual transmission is initiated so that a decision can be made whether or not to proceed with initiation, or to hold the transmission until a later point in time. The assessment of the cellular provider may be made on several different basis. For instance, a pre-approved listing of providers may be utilized, or certain cost calculations may be made at the time that a particular transmission is desired.

In another aspect, vehicle speed has been found to be a reasonable predictor of cellular service conditions. Above certain thresholds vehicle speeds, it can be assumed that the vehicle is traveling on highways and likely to be outside of urban areas. There are other suitable vehicle characteristics, that is, other than speed, that may be sensed for evaluating the location of the vehicle as to whether it is in an urban or rural setting. For instance, present gear selection, frequency of gear changing, and cruise control status (engaged versus disengaged) are examples of such predictive vehicle characteristics. Driver characteristics may also be predictive of the driving environment. For example, the sensing and tracking of driver eye movement may be utilized in determining the driving environment; fast movement usually denotes city driving, while more steady direction of the eyes typically denotes highway driving. Actual environmental characteristics may also be evaluated. In this regard, lane tracking and other road-related sensing systems may be employed in the determination process to assess current driving environment.

As described hereinabove, these locales typically will not be preferred for a data transmission and resultingly can be avoided. In this instance, the timing of a download of data from the vehicle to the central system may either be delayed, or the data content (packet) may be abbreviated to presently supply only critical or otherwise prescribed data, while postponing a full data download until later when more advantageous transmission conditions are identified.

In yet another aspect, the available quality of transmission for data may be analyzed in the determination of whether or not to initiate a data download. If transmission quality is significantly low, the download can be postponed until conditions improve. In this regard, reception conditions may be monitored for a period of time to ascertain signal consistency, which may also be an important parameter utilized in the decision process in determining whether or not to initiate a data transfer.

Not only can these and similar criteria be utilized for determining whether or not to initiate a data transmission, but they can also be used to determine whether or not a data transmission that is in progress should be allowed to continue, or be interrupted. For instance, if a vehicle travels out of the cellular area of an approved provider into the area of an unapproved provider, the transmission may be immediately terminated, or truncated, and later completed under more acceptable conditions.

The beneficial effects described above apply generally to the exemplary systems, methods and schemes that are disclosed herein for a fleet management system; and more specifically, to the initiation and retrieval of information from remotely located vehicles that assure quality of transmission and permit the management of associated costs. The specific arrangements and procedures through which these benefits are delivered will be described in detail hereinbelow.

### BRIEF DESCRIPTION OF THE DRAWINGS:

The invention will now be described in greater detail in the following way of example only and with reference to the attached drawings, in which:

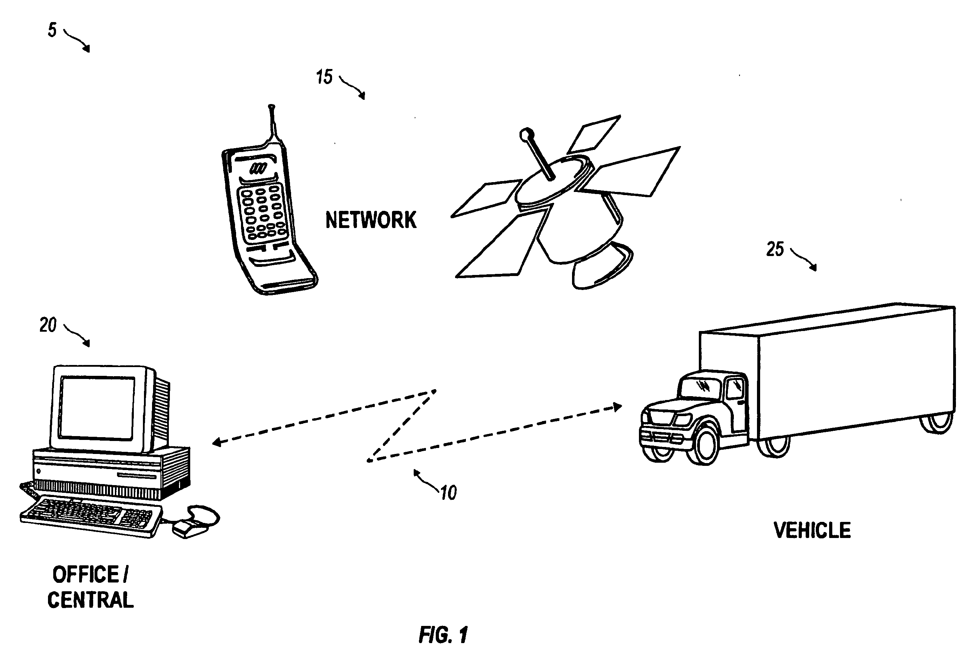

Figure 1 is a schematic representation of an information gathering and management system for vehicle fleets.

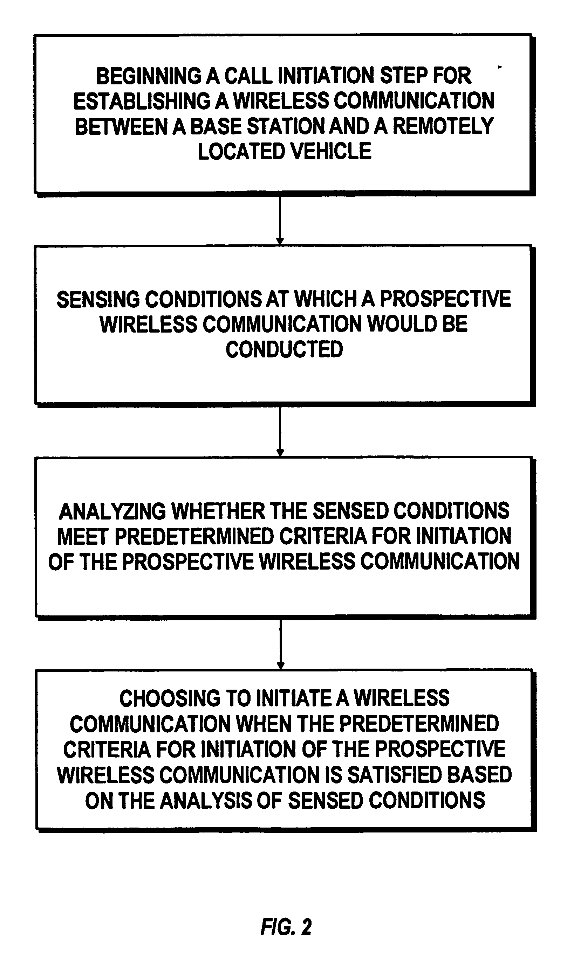

Figure 2 is flow chart representing steps in the initiation process of a data reporting transmission.

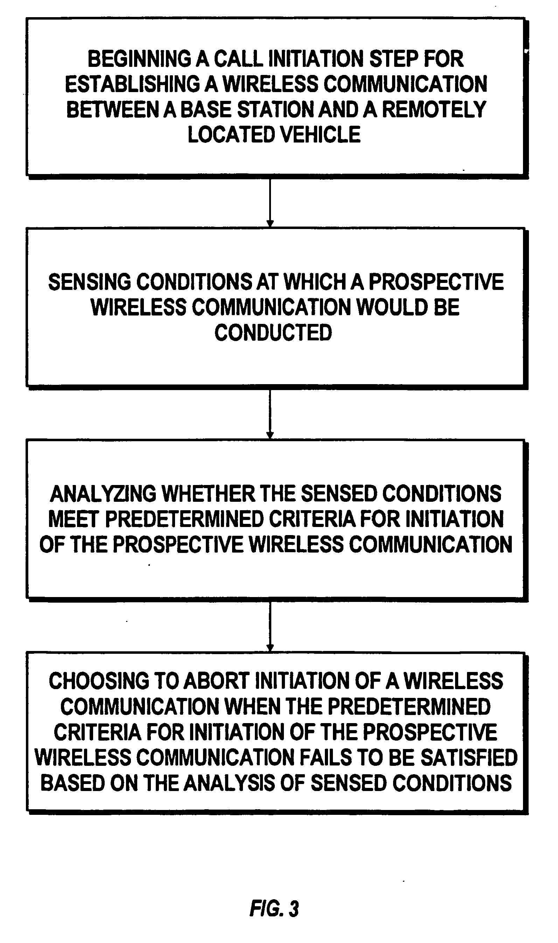

Figure 3 is flow chart representing steps in a decision to abort the initiation process of a data reporting transmission.

### MODE(S) FOR CARRYING OUT THE INVENTION:

As required, detailed embodiments of the present invention are disclosed herein; however, it is to be understood that the disclosed embodiments are merely exemplary of the invention that may be embodied in various and alternative forms. The figures are not necessarily to scale, some features may be exaggerated or minimized to show details of particular components.

Therefore, specific structural and functional details disclosed herein are not to be interpreted as limiting, but merely as a basis for the claims and as a representative basis for teaching one skilled in the art to variously employ the present invention.

Referring to the Figures, in at least one embodiment, the present invention takes the form of a system 5 for optimizing the efficiency of base-to-vehicle communication 10. In a related aspect, the invention takes the form of a method for optimizing the efficiency of base-to-vehicle communication 10. The method includes beginning a call initiation step for establishing a wireless communication 10 between a base station 20 and a remotely located vehicle 25. Conditions are sensed at which a prospective wireless communication 10 would be conducted. The sensed conditions are analyzed to determine whether predetermined criteria are met for initiation of the prospective wireless communication 10. It is then chosen to initiate a wireless communication 10 when the predetermined criteria for initiation of the prospective wireless communication 10 is satisfied based on the analysis of sensed conditions.

In one instance, it may be required that from the sensed conditions it be determined whether the remotely located vehicle 25 is traveling below a predetermined threshold speed. For example, such a threshold speed that would be indicative of highway travel versus urban travel. Alternatively, the determining condition may be transmission quality for the prospective wireless communication 10. Based on these and other suitable criteria, variable amounts of electronic data may be sent from the remotely located vehicle 25 to the base station 20. Exemplarily, abbreviate amounts of electronic data may be sent from the remotely located vehicle 25 to the base station 20 when conditions are acceptable, but not optimal. Alternatively, complete electronic data may be sent from the remotely located vehicle 25 to the base station 20 when conditions are optimal, or at least in an acceptable range.

In another instance, it may be required that from the sensed conditions it be determined whether the calculated cost of the prospective wireless communication 10 meets predetermined parameters. Depending on this calculated cost, a similar scheme may be utilized for sending variable amounts of data from the vehicle 25 to the base 20 considering the cost of sending that information.

In another aspect, it may be decided to abort initiation of the prospective wireless communication 10 when the predetermined criteria for initiation of the prospective wireless communication 10 fail to be satisfied based on the analysis of sensed conditions. For instance, the calculated cost of the prospective wireless communication 10 exceeds a threshold amount. Alternatively, a sensed speed of the vehicle 25 may indicate highway travel where reception is more typically of poor quality and related transmission costs are high.

In an alternative respect, the decision as to whether or not to initiate a wireless communication 10 may be based on the identity of the local provider (or network operator) 15 of wireless communication services to the remotely located vehicle 25. If the local provider 15 is an approved provider, then the transmission 10 may be initiated. If the local provider 15 is not an approved provider, then initiation may be postponed and/or aborted.

One exemplary implementation of the present invention may assume that the office system or base 20 and a communications unit in the vehicle 25 is using a Swedish Europolitan subscription in a GSM cellular telephone. The vehicle 25 travels from Sweden into Norway, and due to bad Europolitan coverage, the cellular service provider 15, also referred to as the operator 15, is selected to be Telenor due to roaming. While in this area, the home system 20 wants to upload data and connects a GSM data call with the communications unit in the vehicle 25. This connection 10 having been established, the office system 20 can then request information from the vehicle 25 regarding which operator 15 is being used in the vehicle. If it is a non-preferred operator, then the call may be disconnected, or the data transmission reduced to information that is minimally necessary at that moment.

In a similar manner, the transmission process maybe initiated at the vehicle without the requirement of a polling inquiry from the base station 20. Similar parameters may be checked prior to initiation of any cellular transmission thereby avoiding the incurrence of any charges until suitable conditions that meet predetermined criteria are detected.

While wireless communication modes are primarily contemplated regarding the present invention, it is contemplated that suitable substitute modes may be employed in carrying out the identified goals of the invention.

In summary, a system and method for managing fleet communications is described herein. These and other variations, which will be appreciated by those skilled in the art, are within the intended scope of this invention as claimed below. As previously stated, detailed embodiments of the present invention are disclosed herein; however, it is to be understood that the disclosed embodiments are merely exemplary of the invention that may be embodied in various forms.

## Claims

1. A method for gathering and transmitting data from a remotely located vehicle to a home-base receiver on wireless communication systems, comprising
- performing a pre-analysis in the vehicle before data is transmitted and before a wireless communication for transmission is initiated; the pre-analysis comprising the steps of:
• sensing conditions in the vehicle to predict the transmission quality at which a prospective wireless communication would be conducted;
• analyzing whether the sensed conditions meet predetermined criteria; and, based on the analysis
• deciding whether to initiate wireless communication for data transmission, or to hold the transmission until a later point in time.

2. Method according to claim 1, the method further comprising
• based on the analysis of the conditions to predict the transmission quality at which a prospective wireless communication would be conducted,
• deciding to transmit abbreviated amounts of data and to postpone a full data transmission.

3. Method according to claim 1 or 2, wherein, if communication for data transmission is established after said pre-analysis step, said conditions are sensed during said data transmission to determine whether or not the data transmission that is in progress should continue or be interrupted.

4. Method according to any one of the previous claims, wherein the conditions in the vehicle include reception conditions.

5. Method according to any one of the preceding claims, wherein said conditions in the vehicle are analyzed to determine whether the location of the vehicle is in an urban or rural setting.

6. Method according to claim 5, wherein said conditions in the vehicle include vehicle characteristics.

7. Method according to claim 6, wherein said vehicle characteristics include at least one of the following: present vehicle speed, present gear selection, frequency of gear changing, and cruise control status.

8. Method according to any one of the claims 5 to 7, wherein said conditions in the vehicle include driver characteristics.

9. Method according to claim 8, wherein said driver characteristics includes sensing and tracking of driver eye movement.

10. Method according to any one of the claims 5 to 9, wherein said conditions in the vehicle include environmental characteristics.

11. Method according to claim 10, wherein said environmental characteristics include lane tracking.

12. Method according to claims 5, 6 and 7, wherein the sensed conditions include the vehicle speed, and the predetermined criteria includes a threshold speed, such that when the remotely located vehicle is traveling below a predetermined threshold speed, the vehicle is deemed to be in a urban area.

13. Method according to any one of the preceding claims, wherein the predetermined criteria includes calculated cost of the prospective wireless communication.

14. Method according to claims 2 and 13, wherein it is decided to transmit abbreviate amounts of data and to postpone a full data transmission based on the calculated cost of the prospective wireless communication.

15. Method according to claim 13 or 14, wherein the predetermined criteria include the calculated cost being below a threshold amount.

16. A method according to any one of the previous claims, wherein the pre-analysis further comprises the step of
• sensing the identity of the local provider of wireless communication services to the remotely located vehicle;
• determining whether that local provider is an approved provider; and, based on said determination;
• deciding whether to initiate wireless communication for data transmission, or to hold the transmission until a later point in time.

## Patentansprüche

1. Verfahren zum Sammeln und Übertragen von Daten von einem entfernt gelegenen Fahrzeug zu einem heimbasierten Empfänger an drahtlosen Kommunikationssystemen, bei dem
- eine Voranalyse in dem Fahrzeug durchgeführt wird, bevor Daten übertragen werden und bevor eine drahtlose Kommunikation zur Übertragung initiiert wird, wobei die Voranalyse die Schritte umfasst,
• Erfassen von Bedingungen in dem Fahrzeug, um die Übertragungsqualität vorherzusagen, mit der eine künftige drahtlose Kommunikation durchgeführt werden würde,
• Analyse, ob die erfassten Bedingungen vorherbestimmte Kriterien erfüllen, und basierend auf der Analyse
• Entscheidung, ob eine drahtlose Kommunikation zur Datenübertragung initiiert wird oder ob die Übertragung bis zu einem späteren Zeitpunkt angehalten wird.

2. Verfahren nach Anspruch 1, wobei das Verfahren außerdem umfasst
• auf der Basis der Analyse der Bedingungen die Vorhersage der Übertragungsqualität, mit der eine zukünftige drahtlose Kommunikation durchgeführt werden würde,
• die Entscheidung, eine gekürzte Menge an Daten zu übertragen und eine vollständige Datenübertragung zu verschieben.

3. Verfahren nach Anspruch 1 oder 2, bei dem, wenn die Kommunikation für die Datenübertragung nach dem Voranalyseschritt hergestellt wird, die Bedingungen während der Datenübertragung erfasst werden, um zu bestimmen, ob die laufende Datenübertragung fortgesetzt oder unterbrochen werden soll oder nicht.

4. Verfahren nach einem der vorhergehenden Ansprüche, bei dem die Bedingungen in dem Fahrzeug Empfangsbedingungen umfassen.

5. Verfahren nach einem der vorhergehenden Ansprüche, bei dem die Bedingungen in dem Fahrzeug analysiert werden, um zu bestimmen, ob der Ort des Fahrzeugs in einem städtischen oder ländlichen Gebiet liegt.

6. Verfahren nach Anspruch 5, bei dem die Bedingungen in dem Fahrzeug Fahrzeugeigenschaften umfassen.

7. Verfahren nach Anspruch 6, bei dem die Fahrzeugeigenschaften wenigstens eines der folgenden umfassen: momentane Fahrzeuggeschwindigkeit, momentane Gangwahl, Frequenz der Gangwahl und Tempomatsteuerungsstatus.

8. Verfahren nach einem der Ansprüche 5 bis 7, bei dem die Bedingungen in dem Fahrzeug Fahrereigenschaften umfassen.

9. Verfahren nach Anspruch 8, bei dem die Fahrereigenschaften das Erfassen und Verfolgen von Fahreraugenbewegung umfassen.

10. Verfahren nach einem der Ansprüche 5 bis 9, bei dem die Bedingungen in dem Fahrzeug Umwelteigenschaften umfassen.

11. Verfahren nach Anspruch 10, bei dem die Umwelteigenschaften eine Spurverfolgung umfassen.

12. Verfahren nach den Ansprüchen 5, 6 und 7, bei dem die erfassten Bedingungen die Fahrzeuggeschwindigkeit umfassen, und die vorherbestimmten Kriterien eine Grenzgeschwindigkeit umfassen, so dass, wenn das entfernt gelegene Fahrzeug unterhalb einer vorherbestimmten Grenzgeschwindigkeit fährt, angenommen wird, dass sich das Fahrzeug in einem städtischen Bereich befindet.

13. Verfahren nach einem der vorhergehenden Ansprüche, bei dem die vorherbestimmten Kriterien kalkulierte Kosten für die zukünftige drahtlose Kommunikation umfassen.

14. Verfahren nach den Ansprüchen 2 und 13, bei welchem auf der Basis der kalkulierten Kosten für die zukünftige drahtlose Kommunikation entschieden wird, eine gekürzte Datenmenge zu übertragen und eine vollständige Datenübertragung zu verschieben.

15. Verfahren nach Anspruch 13 oder 14, bei dem die vorherbestimmten Kriterien kalkulierte Kosten umfassen, die unterhalb einer Grenzmenge liegen.

16. Verfahren nach einem der vorhergehenden Ansprüche, bei dem die Voranalyse außerdem die Schritte umfasst:
• Erfassung der Identität des lokalen Providers von Diensten für eine drahtlose Kommunikation zu dem entfernt gelegenen Fahrzeug,
• Bestimmung, ob der lokale Provider ein anerkannter Provider ist, und auf der Basis der Bestimmung
• Entscheidung, ob eine drahtlose Kommunikation für die Datenübertragung initiiert wird oder ob die Übertragung bis zu einem späteren Zeitpunkt angehalten wird.

## Revendications

1. Procédé pour regrouper et transmettre des données depuis un véhicule situé à distance vers un récepteur domestique sur des systèmes de communication sans fil, comprenant
- la réalisation d'une préanalyse dans le véhicule avant que les données soient transmises et avant qu'une communication sans fil pour une transmission ne soit établie ; la préanalyse comprenant les étapes consistant à :
• détecter des conditions dans le véhicule pour prévoir la qualité de transmission à laquelle une communication sans fil éventuelle sera réalisée ;
• analyser si les conditions détectées répondent à des critères prédéterminés ; et, sur la base de l'analyse :
• décider s'il faut établir une communication sans fil pour une transmission de données, ou s'il faut maintenir la transmission jusqu'à un point ultérieur dans le temps.

2. Procédé selon la revendication 1, le procédé comprenant en outre :
• sur la base de l'analyse des conditions pour prévoir la qualité de transmission à laquelle une communication sans fil éventuelle sera réalisée,
• décider de transmettre des quantités réduites de données et de reporter une transmission de données complète.

3. Procédé selon la revendication 1 ou 2, dans lequel, si une communication pour une transmission de données est établie après ladite étape de préanalyse, lesdites conditions sont détectées pendant ladite transmission de données pour déterminer si la transmission de données qui est en cours doit se poursuivre ou être interrompue.

4. Procédé selon l'une quelconque des revendications précédentes, dans lequel les conditions dans le véhicule comprennent des conditions de réception.

5. Procédé selon l'une quelconque des revendications précédentes, dans lequel lesdites conditions dans le véhicule sont analysées pour déterminer si l'emplacement du véhicule est dans une zone urbaine ou rurale.

6. Procédé selon la revendication 5, dans lequel lesdites conditions dans le véhicule comprennent des caractéristiques de véhicule.

7. Procédé selon la revendication 6, dans lequel lesdites caractéristiques de véhicule comprennent au moins un élément parmi ce qui suit : vitesse actuelle du véhicule, sélection actuelle de vitesse, fréquence de changement de vitesse, et état du régulateur de vitesse.

8. Procédé selon l'une quelconque des revendications 5 à 7, dans lequel lesdites conditions dans le véhicule comprennent des caractéristiques de conducteur.

9. Procédé selon la revendication 8, dans lequel lesdites caractéristiques de conducteur comprennent la détection et le suivi des mouvements de l'oeil du conducteur.

10. Procédé selon l'une quelconque des revendications 5 à 9, dans lequel lesdites conditions dans le véhicule comprennent des caractéristiques environnementales.

11. Procédé selon la revendication 10, dans lequel lesdites caractéristiques environnementales comprennent un suivi de voie.

12. Procédé selon les revendications 5, 6 et 7, dans lequel les conditions détectées comprennent la vitesse du véhicule, et les critères prédéterminés comprennent une vitesse de seuil, de sorte que lorsque le véhicule situé à distance se déplace en dessous d'une vitesse de seuil prédéterminée, le véhicule est considéré comme étant dans une zone urbaine.

13. Procédé selon l'une quelconque des revendications précédentes, dans lequel les critères prédéterminés comprennent un coût calculé de la communication sans fil éventuelle.

14. Procédé selon les revendications 2 et 13, dans lequel il est décidé de transmettre des quantités réduites de données et de reporter une transmission de données complète sur la base du coût calculé de la communication sans fil éventuelle.

15. Procédé selon la revendication 13 ou 14, dans lequel les critères prédéterminés comprennent le coût calculé inférieur à un moment seuil.

16. Procédé selon l'une quelconque des revendications précédentes, dans lequel la préanalyse comprend en outre les étapes consistant à :
• détecter l'identité du fournisseur local de services de communication sans fil au véhicule situé à distance ;
• déterminer si ce fournisseur local est un fournisseur approuvé ; et, sur la base de ladite détermination ;
• décider s'il faut établir une communication sans fil pour une transmission de données, ou s'il faut maintenir la transmission jusqu'à un point ultérieur dans le temps.
